# EUROPÄISCHE PATENTSCHRIFT

(11) **EP 2 955 237 B1**
(45) Veröffentlichungstag und Bekanntmachung des Hinweises auf die Patenterteilung: **21.02.2018**
(21) Anmeldenummer: 15163157.9
(22) Anmeldetag: 10.04.2015
(51) Int. Cl.: C21D 1/673, C21D 8/02, C21D 8/04, C21D 9/46, C22C 21/06, C22F 1/047

(54) **VERFAHREN ZUR HERSTELLUNG EINER PLATINE AUS ALUMINIUM**
METHOD FOR MANUFACTURING A BLANK MADE OF ALUMINIUM
PROCÉDÉ DE FABRICATION D'UNE TÔLE EN ALUMINIUM

(30) Priorität: 10.06.2014 DE 102014108113
(43) Veröffentlichungstag der Anmeldung: 16.12.2015
(73) Patentinhaber: Benteler Automobiltechnik GmbH, 33102 Paderborn (DE)
(72) Erfinder: Bohner, Friedrich, 33813 Oerlinghausen (DE); Dörr, Jochen, 33104 Bad Driburg (DE); Grewe, Jochem, 33154 Salzkotten (DE); Hielscher, Christian, 33129 Delbrück (DE); Tölle, Jörn, 33102 Paderborn (DE); Rauscher, Boris, 33100 Paderborn (DE)
(74) Vertreter: Griepenstroh, Jörg

(56) Entgegenhaltungen:
- EP-A1- 2 415 882
- DE-A1-102013 013 359
- KATHLEEN SIEFERT ET AL: "Enhancement Of Forming Limits Of Aluminum Alloys Using An Intermediate Heat Treatment", AIP CONFERENCE PROCEEDINGS, 27. Oktober 2010 (2010-10-27), Seiten 359-364, XP055207912, ISSN: 0094-243X, DOI: 10.1063/1.3552469

## Beschreibung

Die vorliegende Erfindung betrifft ein Verfahren zur Herstellung einer Platine gemäß den Merkmalen im Oberbegriff von Patentanspruch 1.

Aus dem Stand der Technik ist es bekannt, Fahrzeugbauteile sowie Kraftfahrzeugstrukturbauteile aus metallischen Werkstoffen herzustellen. Hierbei wird einer selbsttragenden Kraftfahrzeugkarosserie die notwendige Steifigkeit für den regulären Fahrzeugbetrieb gegeben. In den letzten Jahren sind die Anforderungen an solche Kraftfahrzeugkarosserien jedoch stark gestiegen. Es stand nicht mehr nur die reine Formgebung im Vordergrund, sondern gleichzeitig auch die gezielte Einstellung von Eigenschaften im Falle eines Fahrzeugcrashes sowie konsequenter Leichtbau.

Hierzu ist es aus dem Stand der Technik bekannt, Stahlwerkstoffe einzusetzen, mit denen es möglich ist, Bauteile mit hochfesten oder gar höchstfesten Eigenschaften bereitzustellen. Diese hochfesten oder höchstfesten Eigenschaften werden gezielt partiell an den Bauteilen hergestellt.

Alternativ ist es bekannt, Kraftfahrzeugbauteile aus Aluminium herzustellen. Aluminium kommt hierbei als Leichtmetallbauteil zum Einsatz und ermöglicht durch sein geringes spezifisches Eigengewicht eine entsprechende Gewichtsersparnis. Die Herstellung des Aluminiumbauteils für Kraftfahrzeuge ist beispielsweise aus der DE 10 2009 008 282 A1 sowie der EP 2 415 882 A1 bekannt.

Aufgabe der vorliegenden Erfindung ist es, ausgehend vom Stand der Technik ein Verfahren zur Herstellung eines Kraftfahrzeugbauteils aus einer Leichtmetalllegierung aufzuzeigen, mit dem es verfahrensökonomisch und kostengünstig möglich ist, ein Kraftfahrzeugbauteil mit voneinander verschiedenen Festigkeitsbereichen zu produzieren.

Die zuvor genannte Aufgabe wird erfindungsgemäß mit einem Herstellungsverfahren gemäß den Merkmalen im Patentanspruch 1 gelöst.

Vorteilhafte Ausführungsvarianten des Verfahrens werden in den abhängigen Patentansprüchen beschrieben.

Das erfindungsgemäße Verfahren zur Herstellung einer Platine mit voneinander verschiedenen Festigkeitsbereichen, zeichnet sich durch folgende Verfahrensschritte aus:
- Bereitstellen einer kaltverfestigten Platine aus einer 5000er Aluminiumlegierung,
- Partielles Erwärmen der Platine in mindestens einem ersten Bereich auf eine Temperatur größer 350°C, insbesondere größer 400°C und in mindestens einem zweiten Bereich auf eine Temperatur zwischen 150°C und 350°C, bevorzugt auf 300°C in weniger als 20 s, bevorzugt weniger als 10 s und insbesondere in 2 bis 5 s,
- Transfer in ein Kühlwerkzeug und Abkühlen in weniger als 20 s, bevorzugt weniger als 10 s und insbesondere in 2 bis 5 s, auf eine Temperatur von 5°C bis 40°C, insbesondere auf Raumtemperatur,
- Einstellen einer Dehngrenze in dem ersten Bereich kleiner 250 MPa und größer 120 MPa und in dem zweiten Bereich kleiner gleich 450 MPa und größer 200 MPa ist, so dass eine flächige Platine mit voneinander verschiedenen Festigkeitsbereichen bereitgestellt wird wobei die Dehngrenze des zweiten Bereichs kleiner als die Ausgangsdehngrenze der Platine und zugleich zumindest mehr als 50 MPa, bevorzugt mehr als 100 MPa größer als die Dehngrenze in dem ersten Bereich ist.

Mit dem erfindungsgemäßen Verfahren ist es somit möglich eine kaltverfestigte 5000er Aluminiumplatine zu erwärmen, mit einer Transferzeit von besonders bevorzugt weniger als 5 s in ein Kühlwerkzeug einzulegen und in dem Kühlwerkzeug wiederum die partiell unterschiedlich erwärmte Platine in besonders kurzer Zeit zu kühlen. Der gesamte Prozess wird bevorzugt in weniger als 50 s, besonders bevorzugt weniger als 40 s und insbesondere weniger als 30 s durchgeführt. Im Ergebnis wird eine flächige Platine mit partiell voneinander verschiedenen Festigkeitsbereichen bereitgestellt, die dann in einer nachgelagerten Umformoperation zu einem Kraftfahrzeugbauteil mit voneinander verschiedenen Festigkeitsbereichen geformt werden kann. Hierdurch ergeben sich besonders kurze Operationszyklen, da insbesondere das nachgelagerte Umformen, dann als Kaltumformen, zeit- und temperaturunabhängig durchgeführt werden kann. Die mit dem erfindungsgemäßen Verfahren hergestellte Platine mit voneinander verschiedenen Festigkeitsbereichen können insbesondere auf Vorrat produziert werden. Es handelt sich bei der Dehngrenze um die Dehngrenze RP 0,2.

Die zunächst bereitgestellte kaltverfestigte Platine wird als naturharte Platine oder kaltverfestigte Platine bereitgestellt. In dieser liegt eine Versetzungsdichte im Kristallgitter vor, die eine Ausgangsfestigkeit bzw. Ausgangsdehngrenze zwischen 400 MPa und 500 MPa innehat. Durch die thermische Behandlung, insbesondere die voneinander verschiedene thermische Behandlung wird die Versetzungsdichte im Kristallgitter reduziert, wodurch sich wiederum die Dehngrenze der ursprünglich bereitgestellten Platine reduziert und aufgrund der partiell voneinander verschiedenen Temperatureinwirkung auch partiell voneinander verschiedene Dehngrenzen eingestellt werden. Insbesondere wird eine weichere bzw. duktilere Werkstoffeigenschaft und eine geringere Dehngrenze in einem Anbindungsbereich des Kraftfahrzeugbauteils bereitgestellt, so dass hier ein Abbrechen oder Ausreißen im Crashfall vermieden wird. Diese Eigenschaften ergeben sich auch mit den nachfolgend beschriebenen Verfahrensvarianten bzw. lassen sich mit diesen gezielt einstellen.

Insbesondere wird die Abkühlung derart homogen ausgeführt, dass die gesamte Platine bzw. das umgeformte Bauteil vollständig abgekühlt wird. Das heißt die unterschiedlich temperierten Bereiche werden gleichsam abgekühlt auf eine gewünschte Zieltemperatur, welche bevorzugt bei Raumtemperatur liegt.
Im Rahmen der Erfindung wird bevorzugt eine Aluminiumlegierung mit der Bezeichnung AW/AA5xxx-Hxx verwendet. Es handelt sich dabei bevorzugt um eine kaltverfestigte Aluminiumlegierung, welche insbesondere durch einen vorgeschalteten Walzprozess entsprechend kaltverfestigt ist und optional in Zwischenschritten oder im Nachgang thermisch nachbehandelt worden sein kann. Dabei handelt es sich insbesondere um ein dem erfindungsgemäßen Erwärmen vorgeschaltetes Kaltwalzen. Durch das Kaltwalzen werden Versetzungen im Kristallgitter ausgebildet, so dass die kaltverfestigte Aluminiumlegierung eine Ausgangsdehngrenze zwischen 200 MPa und 500 MPa aufweist, insbesondere 300 MPa bis 450 MPa. Der Festigkeitszustand ist an dem verfestigten Ausgangsmaterial oder aber auch an einem hieraus hergestellten Kraftfahrzeugbauteil durch einen Zugversuch nachweisbar. Insbesondere wird eine Aluminiumlegierung gemäß der europäischen Norm EN515:1993 im Werkstoffzustand H12, H14, H16, H18, H19, H22, H24, H26, H28, H32, H34, H36 oder H38 verarbeitet, welche als Legierungselemente neben Aluminium zumindest Magnesium und gegebenenfalls Mangan sowie weitere Legierungselemente aufweist. Insbesondere werden mit dem Verfahren in einem ersten Bereich Festigkeiten zwischen 250 MPa und 120 MPa eingestellt und in dem zweiten Bereich Festigkeiten zwischen 450 MPa und 200 MPa eingestellt. Mithin wird ein eher harter Bereich sowie ein diesem gegenüber weicheren bzw. duktilerer Bereich an der Platine und dann mittelbar an dem nachgelagert hergestellten Kraftfahrzeugbauteil oder bei direkter Herstellung des Kraftfahrzeugbauteils an diesem direkt eingestellt.

Weiterhin besonders bevorzugt wird die Platine bzw. das Bauteil vor, während oder nach der Umformung endbeschnitten. Hiermit ist es dann möglich die äußere Bauteilkontur festzulegen. In einer besonders bevorzugten Ausführungsvariante wird eine Platine mit mindestens zwei voneinander verschiedenen Wandstärken umgeformt. Insbesondere kommt hier ein Tailored Material zum Einsatz, wobei die verschiedenen Wandstärken insbesondere durch ein partielles Abwalzen während des Kaltwalzens hergestellt sind. Dies ist als Tailor Rolled Blank bekannt. Im Rahmen der Erfindung ist es jedoch auch möglich, ein Tailor Welded Blank zu verwenden, mithin eine Platine bei der zwei Blechplatinenteile mit unterschiedlicher Wandstärke thermisch gefügt sind. Hierzu eignet sich insbesondere das Reibrührschweißen, aber auch andere stoffschlüssige Kopplungsverfahren können zum Einsatz kommen. Im Rahmen der Erfindung ist es jedoch auch möglich, eine gepatchte Platine zu verwenden, so dass ein Bauteilpatch auf die Platine lokal aufgebracht wird. Die Platine wird dann zusammen mit dem Bauteilpatch umgeformt. Das Bauteilpatch wird dabei insbesondere mit der Platine verklebt sowie durch mechanische oder thermische Verfahren, wie z.B. Clinchen, Nieten, Reibrührschweißen, Punktschweißen in Position fixiert, wobei der Kleber thermisch aktivierbar ist und bei Erwärmen der Platine auf Umformtemperatur entsprechend mit der Platine zusammen verklebt wird.

Bezüglich der Einstellung der Dehngrenze im fertigen Kraftfahrzeugbauteil beziehen sich die Werte jeweils auf die Grundplatine, das heißt, auf die größere der Platinen, auf die wenigstens eine Patchplatine aufgebracht wurde.

Als Werkstoff für die Patchplatine kann dieselbe Aluminiumlegierung wie für die Grundplatine Verwendung finden. In diesem Fall ist der Ausgangslieferzustand oder die Wärmebehandlung der Patchplatine so zu wählen, dass während der Umformung zumindest das Formänderungsvermögen des korrespondierenden Bereiches der Grundplatine erreicht wird. Das gleiche gilt aber auch bei Einsatz eines anderen Patchwerkstoffes.

Besonders bevorzugt wird bei dem Tailored Material eine Platine mit Dickenvariationen zwischen 1 mm und 10 mm, insbesondere von 2 mm bis 6 mm Wandstärke umgeformt. Die Platine kann dann zumindest partiell dickere Wandstärken aufweisen, wobei die dickeren Wandstärken zwischen 2 mm und 15 mm, insbesondere zwischen 3 mm und 12 mm und ganz besonders bevorzugt zwischen 3,5 mm und 10 mm aufweisen und insbesondere bis zu 3 mm dicker sind als die übrigen Bereiche der Platine.

Insbesondere wird mit dem erfindungsgemäßen Verfahren ein Kraftfahrzeugbauteil aus einer Aluminiumlegierung hergestellt, welches im Fall einer Kollision lokal eine, in dessen Auslegung vorausdefinierte Deformation erfahren soll, wobei das Kraftfahrzeugbauteil in Beschnittbereichen und/oder Koppelabschnitten duktiler und weicher eingestellt werden kann.

Weiterhin kann das Kraftfahrzeugbauteil mit weiteren Verstärkungsteilen gefügt werden. Auch die Verstärkungsteile können nach dem erfindungsgemäßen Verfahren hergestellt werden. Die Verstärkungsteile selbst werden bevorzugt nach Abschluss des Umformverfahrens mit dem Kraftfahrzeugbauteil gefügt. Insbesondere handelt es sich dabei um eine Innenverstärkung und/oder eine Außenverstärkung. Die Innenverstärkung kann beispielsweise in Form eines Patches auf das hergestellte Kraftfahrzeugbauteil aufgebracht werden. Im Rahmen der Erfindung ist es jedoch auch möglich, durch die Koppelung mit der Innenverstärkung und/oder der Außenverstärkung ein entsprechendes Hohlbauteil herzustellen. Bei den Verstärkungen handelt es sich insbesondere auch um Aluminiumbauteile. Die Verstärkung kann jedoch auch als Stahlbauteil ausgebildet sein oder aus Faserverbundwerkstoff aufgebracht sein. Besonders bevorzugt wird die Verstärkung mit dem Kraftfahrzeugbauteil verklebt. Das Kleben wird insbesondere mit einem thermischen oder mechanischen Fügeverfahren kombiniert, um die Verstärkung beim Aushärten in Position zu halten. Im Rahmen der Erfindung ist es jedoch auch möglich, dass die beiden Bauteile miteinander thermisch gefügt werden. Auch sind formschlüssige Koppelungsverfahren wie Nieten, insbesondere Stanznieten oder aber ein Clinchvorgang möglich.

Das Kühlwerkzeug kann dabei im Rahmen der Erfindung ein plattes Kühlwerkzeug sein, das durch Anlagenkontakt eine Kühlung herbeiführt. Im Rahmen der Erfindung ist es jedoch auch möglich, dass das Kühlwerkzeug beispielsweise als Tauchbad ausgebildet ist, so dass die gesamte temperierte Platine und/oder das temperiert hergestellt und umgeformte Kraftfahrzeugbauteil in das Tauchbad eingetaucht werden und hierbei abgekühlt wird.

Im Rahmen der Erfindung werden jedoch bei allen Ausführungsvarianten grundsätzlich immer die gesamte Platine vollständig abgekühlt. Weiterhin kann das Abkühlen in einem ersten und zweiten Kühlvorgang durchgeführt werden. Hierbei wird in dem ersten Kühlvorgang auf eine Temperatur zwischen 120°C und 200°C abgekühlt und in dem zweiten Kühlvorgang auf im Wesentlichen Raumtemperatur abgekühlt. Die beiden Kühlvorgänge können dabei in einem Kühlwerkzeug aber auch in zwei voneinander separaten Kühlwerkzeugen durchgeführt werden.

Im Rahmen der Erfindung werden die Platine oder das Bauteil weiterhin besonders bevorzugt oberflächenbehandelt. Hierunter ist insbesondere eine Beschichtung, ganz besonders bevorzugt eine Konversionsbeschichtung zu verstehen. Die Oberflächenbehandlung der Platine oder des Bauteils wirkt sich insbesondere vorteilhaft auf die Weiterverarbeitung mit Hinblick auf ein Fügen aus. Aufgrund der Oberflächenbehandlung besitzen die Platine oder das Bauteil, im Gegensatz zur sich unter Umgebungseinfluss selbsttätig bildenden inhomogenen und verunreinigten Oxidschicht, definierte, reproduzierbare Oberflächeneigenschaften. Dies wirkt sich insbesondere positiv auf alle nachfolgenden Fertigungsverfahren aus, welche eine Bindung mit dieser Oberfläche herstellen, wie z.B. Kleben, Lackieren oder zur Stabilisierung des Verfahrens möglichst reproduzierbare Eingangseigenschaften benötigen, wie z.B. Lichtbogenschweißen.

Im Rahmen der Erfindung wird zur Durchführung des Verfahrens insbesondere ein Werkzeug eingesetzt, das verschiedene Abschnitte aufweist, wobei die Abschnitte in dem Werkzeug voneinander verschiedene Temperaturen in Bezug auf ein Erwärmen oder aber Kühlen einnehmen können und diese Abschnitte mit der Platine unter erhöhter Flächenpressung in Kontakt gebracht werden. Hierdurch sind dann die verschiedenen Temperaturgefälle an der Platine in den dort verschieden zu temperierenden Bereichen realisierbar. Die verschiedenen Abschnitte in dem Temperierwerkzeug können beispielsweise durch voneinander unabhängige Temperiersegmente, die insbesondere gegeneinander isoliert sind, ermöglicht werden.

Weitere Vorteile, Merkmale, Eigenschaften und Aspekte der vorliegenden Erfindung werden in der nachfolgenden Beschreibung erläutert sowie in den schematischen Figuren dargestellt. Diese dienen dem einfachen Verständnis der Erfindung. Es zeigen:
- Figur 1a und b: eine Seitenansicht sowie eine Querschnittsansicht einer erfindungsgemäß hergestellten Kraftfahrzeug B-Säule,
- Figur 2a und b: ein Außenverstärkungsblech für eine Kraftfahrzeug B-Säule gemäß Figur 1 und
- Figur 3a bis c: ein Innenverstärkungsblech.

In den Figuren werden für gleiche oder ähnliche Bauteile dieselben Bezugszeichen verwendet, auch wenn eine wiederholte Beschreibung aus Vereinfachungsgründen entfällt.

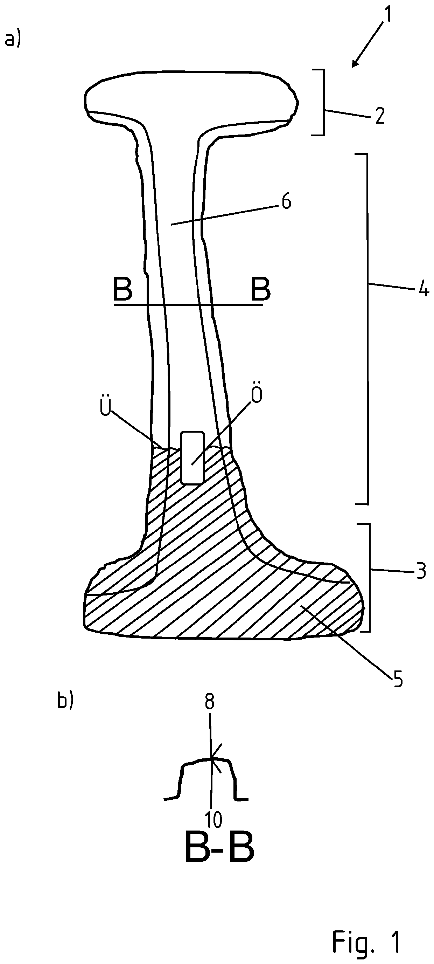

Figur 1a zeigt ein erfindungsgemäßes Kraftfahrzeugbauteil 1 in Form einer B-Säule in Seitenansicht. Die B-Säule weist einen Kopfbereich 2 zur Anbindung an einen nicht näher dargestellten Dachholm sowie einen Fußbereich 3 zur Anbindung an einen nicht näher dargestellten Seitenschweller auf. Zwischen dem Kopfbereich 2 und dem Fußbereich 3 erstreckt sich ein Mittelabschnitt 4 mit einer Öffnung Ö. Erfindungsgemäß ist nunmehr der Fußbereich 3 sowie ein unterer Teil des Mittelabschnittes 4 ausgebildet als erster Bereich 5, der während des Umformens auf der Umformtemperatur gehalten wird, so dass hier ein weicheres bzw. duktileres Gefüge mit bevorzugt zwischen 120 und 250 MPa eingestellt ist. Der obere Mittelabschnitt 4 sowie der Kopfbereich 2 sind hier als zweiter Bereich 6 ausgebildet, der gegenüber dem ersten Bereich 5 härtere Eigenschaften aufweist und eine Dehngrenze zwischen 250 MPa und 450 MPa besitzt. Getrennt sind erster Bereich 5 und zweiter Bereich 6 durch einen Übergang Ü, der sich über 1 mm bis 100 mm, vorzugsweise 15 mm bis 50 mm erstreckt. In Figur 1b ist ein Querschnitt gemäß der Schnittlinie B-B dargestellt, so dass zu erkennen ist, dass während des Umformverfahrens zumindest der Mittelabschnitt 4 in Form eines Hutprofils im Querschnitt ausgebildet wurde. Somit ist das Bauteil dreidimensional geformt worden.

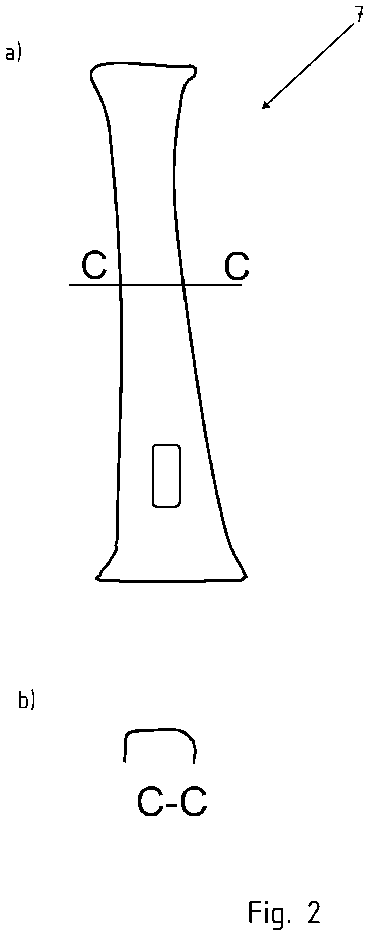

Ferner dargestellt sind in Figur 2a und b ein Außenverstärkungsblech 7 in Seitenansicht sowie in Querschnittsansicht. Das Außenverstärkungsblech 7 weist einen im Wesentlichen homogenen Querschnittsverlauf auf und ist gemäß Figur 2b als U-förmiges Verstärkungsblech ausgebildet. Dieses wird auf die Außenseite 8 gemäß Figur 1b des Kraftfahrzeugbauteils 1 aufgebracht, insbesondere durch Verkleben, besonders bevorzugt mit thermisch aktivierbarem Kleber.

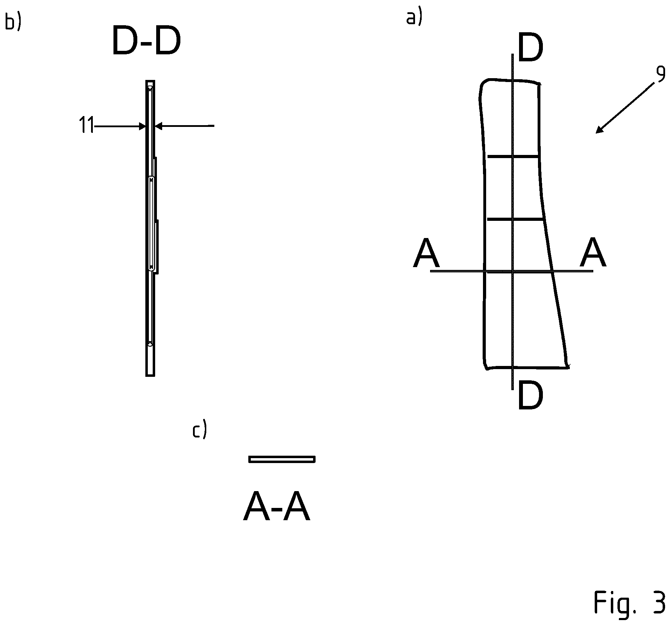

In Figur 3a bis c ist ferner ein Innenverstärkungsblech 9 dargestellt, dass in Figur 3a als Seitenansicht, Figur 3b als Längsschnitt und Figur 3c als Querschnitt dargestellt ist. Das Innenverstärkungsblech 9 wird auf einer Innenseite gemäß Figur 1b der B-Säule angebracht. Das Innenverstärkungsblech 9 weist gemäß Längsschnittlinie D-D partiell voneinander verschiedene Wandstärken 11 im Längsverlauf auf. Der Querschnittsverlauf ist dargestellt in Figur 3c gemäß Schnittlinie A-A, wobei dieser homogen und flach ausgebildet ist. Das Innenverstärkungsblech 9 wird an der Innenseite 10 gemäß Figur 1b aufgebracht, bevorzugt durch Verkleben.

Das Innenverstärkungsblech wird bevorzugt hergestellt aus einer zu einem Profil stranggepressten Aluminiumlegierung, wobei unterschiedliche Wandstärken im Profil eingestellt werden und in einem nachfolgenden Prozessschritt das Profil längs beschnitten, optional flach abgewickelt und/oder auf seine Endform pressgeformt wird.

### Bezugszeichen:

1 - Kraftfahrzeugbauteil
2 - Kopfbereich
3 - Fußbereich
4 - Mittelabschnitt
5 - erster Bereich
6 - zweiter Bereich
7 - Außenverstärkungsblech
8 - Außenseite zu 1
9 - Innenverstärkungsblech
10 - Innenseite zu 1
11 - Wandstärke

Ö - Öffnung
Ü - Übergang

## Patentansprüche

1. Verfahren zur Herstellung einer Platine mit voneinander verschiedenen Festigkeitsbereichen, **gekennzeichnet, durch** folgende Verfahrensschritte:
- Bereitstellen einer kaltverfestigten Platine aus einer 5000er Aluminiumlegierung,
- Partielles Erwärmen der Platine in einem ersten Bereich (5) auf eine Temperatur größer 350°C und in einem zweiten Bereich (6) auf eine Temperatur zwischen 150°C und 350°C, in weniger als 20 s,
- Transfer in ein Kühlwerkzeug und Abkühlen in weniger als 20 s, auf eine Temperatur von 5°C bis 40°C,
- Einstellen einer Dehngrenze in dem ersten Bereich (5) kleiner 250 MPa und größer 120 MPa und in dem zweiten Bereich (6) kleiner 450 MPa und größer 200 MPa, so dass eine flächige Platine mit voneinander verschiedenen Festigkeitsbereichen bereitgestellt wird, wobei die Dehngrenze des zweiten Bereichs (6) kleiner als die Ausgangsdehngrenze der Platine und zugleich zumindest 50 MPa größer als die Dehngrenze in dem ersten Bereich (5) ist.

2. Verfahren nach Anspruch 1, **dadurch gekennzeichnet, dass** ein nachgelagertes Umformen der Platine zu einem Kraftfahrzeugbauteil (1) mit voneinander verschiedenen Festigkeitsbereichen erfolgt.

3. Verfahren nach Anspruch 2, **dadurch gekennzeichnet, dass** die Platine vor oder das Kraftfahrzeugbauteil während oder nach der Umformung beschnitten wird.

4. Verfahren nach einem der Ansprüche 2 oder 3, **dadurch gekennzeichnet, dass** eine Platine mit mindestens zwei voneinander verschiedenen Wandstärken (11) umgeformt wird.

5. Verfahren nach einem der Ansprüche 2 bis 4, **dadurch gekennzeichnet, dass** eine Kraftfahrzeugsäule aus Aluminium hergestellt wird, wobei die Kraftfahrzeugsäule mit einem Innenverstärkungsblech (9) und/oder einem Außenverstärkungsblech (7) gekoppelt wird.

6. Verfahren nach Anspruch 5, **dadurch gekennzeichnet, dass** das Innenverstärkungsblech (9) und/oder Außenverstärkungsblech (7) vor dem Umformen mit der Platine oder nach dem Umformen mit der Kraftfahrzeugsäule verklebt wird.

7. Verfahren nach einem der Ansprüche 1 bis 6, **dadurch gekennzeichnet, dass** das Abkühlen in einem ersten und einem zweiten Kühlvorgang durchgeführt wird, wobei in dem ersten Kühlvorgang auf eine Temperatur zwischen 120 und 200°C abgekühlt wird und der erste Kühlvorgang in weniger als 10 s durchgeführt wird und in dem zweiten Kühlvorgang auf Raumtemperatur abgekühlt wird, wobei der zweite Kühlvorgang in weniger als 10 s durchgeführt wird.

8. Verfahren nach Anspruch 7, **dadurch gekennzeichnet, dass** der zweite Kühlvorgang in einem separaten Kühlwerkzeug durchgeführt wird.

9. Verfahren nach Anspruch 1, **dadurch gekennzeichnet, dass** die Platine oberflächenbehandelt wird.

10. Verfahren nach Anspruch 9, **dadurch gekennzeichnet, dass** die Platine beschichtet wird.

## Claims

1. Method for manufacturing a board with different strength areas, **characterised by** the following method steps:
- Providing a strain-hardened board made from a 5000 aluminium alloy,
- Partial heating of the board in a first range (5) to a temperature greater than 350°C and in a second range (6) to a temperature between 150°C and 350°C, in less than 20s,
- Transfer to a cooling mould and cooling in less than 20s to a temperature of 5°C to 40°C,
- Setting a yield strength in a first range (5) of less than 250MPa and greater than 120MPa and in a second range (6) of less than 450MPa and greater than 200MPa, so that a flat board with different strength areas is produced, whereby the yield strength of the second area (6) is less than the starting yield limit of the board and, at the same time, is at least 50MPa greater than the yield strength in the first area (5).

2. Method according to claim 1, **characterised by** the fact that there is a downstream reshaping of the board into a vehicle component (1) with different strength areas.

3. Method according to claim 2, **characterised by** the fact that the board is cut before reshaping or the vehicle component is cut during or after reshaping.

4. Method according to one of claims 2 or 3, **characterised by** the fact that a board is reshaped with at least two different wall thicknesses (11).

5. Method according to one of claims 2 to 4, **characterised by** the fact that vehicle column is manufactured out of aluminium, whereby the vehicle column is linked to an internal reinforcement sheet (9) and/or an external reinforcement sheet (7).

6. Method according to claim 5, **characterised by** the fact that the internal reinforcement sheet (9) and/or external reinforcement sheet (7) is stuck to the board before reshaping or stuck to the vehicle column after reshaping.

7. Method according to one of claims 1 to 6, **characterised by** the fact that the cooling is done in a first and a second cooling procedure, whereby it is cooled to a temperature of between 120 and 200°C in the first cooling procedure and the first cooling procedure is done in less than 10s and cooling is to room temperature in the second cooling procedure, with the second cooling procedure being done in less than 10s.

8. Method according to claim 7, **characterised by** the fact that the second cooling procedure is carried out in a separate cooling mould.

9. Method according to claim 1, **characterised by** the fact that the board is surface-treated.

10. Method according claim 9, **characterised by** the fact that the board is coated.

## Revendications

1. Procédé de fabrication d'une plaque ayant des zones de résistance différentes les unes des autres, **caractérisé par** les étapes de procédé suivantes :
- fourniture d'une plaque écrouie à froid à partir d'un alliage d'aluminium de la série 5000,
- chauffage partiel de la plaque dans une première zone (5) à une température supérieure à 350 °C et dans une deuxième zone (6) à une température comprise entre 150 °C et 350 °C, en moins de 20 secondes,
- transfert dans un outil de refroidissement et refroidissement en moins de 20 secondes à une température de 5 °C à 40 °C,
- réglage d'une limite d'allongement dans la première zone (5) inférieure à 250 MPa et supérieure à 120 MPa et dans la deuxième zone (6) inférieure à 450 MPa et supérieure à 200 MPa, de manière à fournir une plaque plate avec des zones de résistance différentes les unes des autres, la limite d'allongement de la deuxième zone (6) étant inférieure à la limite d'allongement de départ de la plaque et en même temps supérieure d'au moins 50 MPa à la limite d'allongement dans la première zone (5).

2. Procédé selon la revendication 1, **caractérisé en ce qu'**on effectue un formage postérieur de la plaque en une pièce de véhicule automobile (1) ayant des zones de résistance différentes les unes des autres.

3. Procédé selon la revendication 2, **caractérisé en ce qu'**on découpe la plaque avant le formage ou on découpe la pièce de véhicule automobile pendant ou après le formage.

4. Procédé selon l'une quelconque des revendications 2 ou 3, **caractérisé en ce qu'**on forme une plaque avec au moins deux épaisseurs (11) différentes l'une de l'autre.

5. Procédé selon l'une quelconque des revendications 2 à 4, **caractérisé en ce qu'**on fabrique un montant de véhicule automobile en aluminium, lequel montant de véhicule automobile est couplé à une tôle de renfort intérieure (9) et/ou à une tôle de renfort extérieure (7).

6. Procédé selon la revendication 5, **caractérisé en ce qu'**on colle la tôle de renfort intérieure (9) et/ou la tôle de renfort extérieure (7) à la plaque avant le formage ou au montant de véhicule automobile après le formage.

7. Procédé selon l'une quelconque des revendications 1 à 6, **caractérisé en ce qu'**on effectue le refroidissement dans une première opération de refroidissement et dans une deuxième opération de refroidissement, le refroidissement s'effectuant dans la première opération de refroidissement à une température comprise entre 120 et 200 °C et la première opération de refroidissement s'effectuant en moins de 10 secondes, le refroidissement s'effectuant dans la deuxième opération de refroidissement à la température ambiante et la deuxième opération de refroidissement s'effectuant en moins de 10 secondes.

8. Procédé selon la revendication 7, **caractérisé en ce que** la deuxième opération de refroidissement s'effectue dans un outil de refroidissement séparé.

9. Procédé selon la revendication 1, **caractérisé en ce que** la plaque subit un traitement de surface.

10. Procédé selon la revendication 9, **caractérisé en ce que** la plaque reçoit un revêtement.
